# EUROPEAN PATENT APPLICATION

(11) **EP 4 195 177 A1**
(43) Date of publication of application: **14.06.2023**
(21) Application number: 21857781.5
(22) Date of filing: 20.08.2021
(51) Int. Cl.: G08G 1/04, G08G 1/095, G08G 1/0967

(54) **TRAFFIC SIGNAL IDENTIFICATION METHOD AND APPARATUS**

(30) Priority: 20.08.2020 CN 202010844540
(71) Applicant: Huawei Technologies Co., Ltd., Shenzhen, Guangdong 518129 (CN)
(72) Inventor: LI, Jiang, Shenzhen, Guangdong 518129 (CN); HU, Xiangyu, Shenzhen, Guangdong 518129 (CN); HU, Hongqi, Shenzhen, Guangdong 518129 (CN)
(74) Representative: Gill Jennings & Every LLP
(86) International application number: PCT/CN2021/113873
(87) International publication number: WO 2022/037693

(57) **Abstract**

Disclosed are a traffic signal recognition method, a traffic signal indication apparatus (100), and a terminal (200), which are applied to the field of intelligent driving. In addition to an existing visible light signal indication system in a traffic light pattern, the traffic signal indication apparatus (100) adds a near infrared light source (110, S). The vehicle-mounted terminal (200) determines, based on a collected near infrared light signal, traffic operation information indicated by the traffic signal indication apparatus (100). The near infrared light signal has stronger penetration force than a visible light signal. Therefore, traffic signal recognition accuracy can be improved.

## Description

This application claims priority to Chinese Patent Application No. 202010844540.3, filed with the China National Intellectual Property Administration on August 20, 2020 and entitled "TRAFFIC SIGNAL RECOGNITION METHOD AND APPARATUS", which is incorporated herein by reference in its entirety.

### TECHNICAL FIELD

This application relates to the field of intelligent driving, and in particular, to a traffic signal recognition method and apparatus.

### BACKGROUND

Traffic light recognition is a difficult problem that needs to be resolved in an implementation process of automatic driving.

In an existing vehicle-mounted assisted driving system, a vehicle-mounted camera is used to recognize color information of a traffic light.

In current technical conditions, most traffic light signal sources are LEDs. When traffic lights are recognized by using images collected by a camera, the traffic lights have many defects, such as different shapes, color distortion after imaging, incomplete images, and interference from many road objects. In addition, the camera is restricted by aspects such as a detection distance and an environment, and cannot recognize the traffic lights in harsh weather conditions such as fog, rain, and snow.

### SUMMARY

Embodiments of this application provide a traffic signal recognition method and apparatus, to improve traffic signal recognition accuracy.

A first aspect of embodiments of this application provides a traffic signal recognition method. The traffic signal recognition method is applied to a terminal device, and the method includes: obtaining a near infrared light signal emitted by a traffic signal indication apparatus; obtaining a target characteristic of the near infrared light signal, where the target characteristic includes at least one of a wavelength, an imaging shape, and a pulse form; performing matching with at least two preset characteristic descriptions based on the target characteristic, where the at least two characteristic descriptions respectively indicate different traffic operation information; and determining, based on a matching result, target traffic operation information corresponding to the target characteristic.

Different from conventional traffic light signal recognition, in the traffic signal recognition method provided in this embodiment of this application, a terminal obtains the near infrared light signal emitted by the traffic signal indication apparatus, and determines current traffic operation information based on the near infrared light signal. Because near infrared light is invisible light, compared with visible light, the near infrared light has a strong penetration capability. This can reduce a determining error caused by interference of a factor such as an environment when the terminal recognizes a traffic light by using an image in an intelligent driving system, and can improve traffic signal recognition accuracy.

In addition, in the traffic signal recognition method provided in this embodiment of this application, the terminal may preset the at least two characteristic descriptions that respectively indicate the different traffic operation information. The characteristic description is used to match the target characteristic of the near infrared light signal. The target characteristic includes at least one of the wavelength, the imaging shape, and the pulse form. After obtaining the near infrared light signal emitted by the traffic signal indication apparatus and obtaining the target characteristic of the near infrared light signal, the terminal may perform matching with the at least two preset characteristic descriptions based on the target characteristic, and determine, based on the matching result, the target traffic operation information corresponding to the target characteristic. This provides different characteristics distinguishing near infrared signals, and can improve diversity of transmitted traffic operation information.

In a possible implementation, the traffic signal recognition method is applied to a vehicle-mounted terminal device.

In a possible implementation of the first aspect, the at least two characteristic descriptions respectively indicate at least two types of traffic operation information of "forbidden to pass", "warning", and "permitted to pass".

In a possible implementation of the first aspect, the at least two characteristic descriptions respectively describe near infrared light signal wavelength ranges that do not have intersection between each other.

According to the traffic signal recognition method provided in this embodiment of this application, the terminal may determine different traffic operation information based on the matching result obtained by matching the target characteristic with at least two preset near infrared light signal wavelength ranges. For example, traffic operation information corresponding to common traffic lights may be indicated by using near infrared light signal wavelength ranges, that is, "forbidden to pass", "warning", and "permitted to pass".

In a possible implementation of the first aspect, the target characteristic includes the wavelength. When a wavelength of the near infrared light signal falls within a first wavelength range, it is determined that current traffic operation information indicated by the traffic signal indication apparatus is "forbidden to pass". Alternatively, when a wavelength of the near infrared light signal falls within a second wavelength range, it is determined that current traffic operation information indicated by the traffic signal indication apparatus is "warning". Alternatively, when a wavelength of the near infrared light signal falls within a third wavelength range, it is determined that current traffic operation information indicated by the traffic signal indication apparatus is "permitted to pass". There is no intersection between the first wavelength range, the second wavelength range, and the third wavelength range.

In a possible implementation of the first aspect, the at least two characteristic descriptions respectively describe different near infrared light signal imaging shapes.

According to the traffic signal recognition method provided in this embodiment of this application, the terminal may indicate different traffic operation information in another manner of distinguishing near infrared light signals. Specifically, traffic operation information corresponding to common traffic lights is indicated by using near infrared light signal imaging shapes, that is, "forbidden to pass", "warning", and "permitted to pass". This increases diversity of solution implementation.

In a possible implementation of the first aspect, the target characteristic includes the imaging shape. When the near infrared light signal is an image of a first shape, it is determined that current traffic operation information indicated by the traffic signal indication apparatus is "forbidden to pass". Alternatively, when the near infrared light signal is an image of a second shape, it is determined that current traffic operation information indicated by the traffic signal indication apparatus is "warning". Alternatively, when the near infrared light signal is an image of a third shape, it is determined that current traffic operation information indicated by the traffic signal indication apparatus is "permitted to pass".

In a possible implementation of the first aspect, the at least two characteristic descriptions respectively describe different near infrared light signal pulse forms.

According to the traffic signal recognition method provided in this embodiment of this application, the terminal may indicate different traffic operation information in still another manner of distinguishing near infrared light signals. Specifically, traffic operation information corresponding to common traffic lights is indicated by using near infrared light signal pulse forms, that is, "forbidden to pass", "warning", and "permitted to pass". This increases diversity of solution implementation.

In a possible implementation of the first aspect, the target characteristic includes the pulse form. When the near infrared light signal is a pulse signal in a first pulse form, it is determined that current traffic operation information indicated by the traffic signal indication apparatus is "forbidden to pass". Alternatively, when the near infrared light signal is a pulse signal in a second pulse form, it is determined that current traffic operation information indicated by the traffic signal indication apparatus is "warning". Alternatively, when the near infrared light signal is a pulse signal in a third pulse form, it is determined that current traffic operation information indicated by the traffic signal indication apparatus is "permitted to pass".

A second aspect of embodiments of this application provides a traffic signal indication method. The traffic signal indication method is applied to a traffic signal indication apparatus, and the traffic signal indication apparatus includes a near infrared light source and a controller. The method includes: The controller sends a control instruction to the near infrared light source. The near infrared light source emits a near infrared light signal according to the control instruction, where the near infrared light signal indicates traffic operation information.

According to the traffic signal recognition method provided in this embodiment of this application, the traffic signal indication apparatus includes the near infrared light source and the controller. The controller may send the control instruction to the near infrared light source according to a preset rule or based on control information obtained in real time. The near infrared light source emits the near infrared light signal according to the control instruction, to indicate real-time traffic operation information. Because near infrared light has a strong penetration capability, accuracy of recognizing traffic operation information by a vehicle-mounted terminal in an intelligent driving system is facilitated.

In a possible implementation of the second aspect, that the controller sends a control instruction to the near infrared light source specifically includes: The controller cyclically sends a plurality of control instructions to the near infrared light source based on a preset period. That the near infrared light source emits a near infrared light signal according to the control instruction specifically includes: The near infrared light source emits a plurality of near infrared light signals according to the plurality of control instructions, where the plurality of near infrared light signals indicate a plurality of types of traffic operation information.

According to the traffic signal recognition method provided in this embodiment of this application, the controller may cyclically send the control instructions based on the preset period, to continuously provide guidance for traffic operation at an intersection.

In a possible implementation of the second aspect, that the near infrared light source emits a plurality of near infrared light signals according to the plurality of control instructions specifically includes: The near infrared light source emits a first near infrared light signal according to a first control instruction, where the first near infrared light signal indicates "forbidden to pass"; the near infrared light source emits a second near infrared light signal according to a second control instruction, where the second near infrared light signal indicates "warning"; and the near infrared light source emits a third near infrared light signal according to a third control instruction, where the third near infrared light signal indicates "permitted to pass".

According to the traffic signal recognition method provided in this embodiment of this application, the three control instructions may indicate the near infrared light source to emit three near infrared light signals that simulate traffic operation information indicated by common traffic lights with red, yellow, and green colors.

In a possible implementation of the second aspect, any two of the first near infrared light signal, the second near infrared light signal, and the third near infrared light signal differ in at least one of the following: shapes, wavelengths, or pulse forms.

According to the traffic signal recognition method provided in this embodiment of this application, different near infrared light signals may be distinguished by using at least one of shapes, wavelengths, or pulse forms. This improves form diversity of the near infrared light signals. For example, in a multi-lane large intersection scenario, there are a large quantity of types of traffic operation information. For example, different traffic operation information needs to be indicated for each lane. In this scenario, a plurality of types of traffic operation information need to be indicated at the same time. Therefore, in this solution, a quantity of types of traffic operation information that can be indicated is increased.

A third aspect of embodiments of this application provides a terminal. The terminal includes: an obtaining unit, configured to obtain a near infrared light signal emitted by a traffic signal indication apparatus; and obtain a target characteristic of the near infrared light signal, where the target characteristic includes at least one of a wavelength, an imaging shape, and a pulse form; and a determining unit, configured to perform matching with at least two preset characteristic descriptions based on the target characteristic, where the at least two characteristic descriptions respectively indicate different traffic operation information; and determine, based on a matching result, target traffic operation information corresponding to the target characteristic.

In a possible implementation of the third aspect, the determining unit is specifically configured to determine, based on at least one of the wavelength, the imaging shape, and the pulse form of the near infrared light signal, traffic operation information indicated by the traffic signal indication apparatus.

In a possible implementation of the third aspect, the at least two characteristic descriptions respectively indicate at least two types of traffic operation information of "forbidden to pass", "warning", and "permitted to pass".

In a possible implementation of the third aspect, the at least two characteristic descriptions respectively describe near infrared light signal wavelength ranges that do not have intersection between each other.

In a possible implementation of the third aspect, on a basis that the target characteristic includes the wavelength, the determining unit is specifically configured to: when a wavelength of the near infrared light signal falls within a first wavelength range, determine that current traffic operation information indicated by the traffic signal indication apparatus is "forbidden to pass"; when a wavelength of the near infrared light signal falls within a second wavelength range, determine that current traffic operation information indicated by the traffic signal indication apparatus is "warning"; or when a wavelength of the near infrared light signal falls within a third wavelength range, determine that current traffic operation information indicated by the traffic signal indication apparatus is "permitted to pass". There is no intersection between the first wavelength range, the second wavelength range, and the third wavelength range.

In a possible implementation of the third aspect, the at least two characteristic descriptions respectively describe different near infrared light signal imaging shapes.

In a possible implementation of the third aspect, on a basis that the target characteristic includes the imaging shape, the determining unit is specifically configured to: when the near infrared light signal is an image of a first shape, determine that current traffic operation information indicated by the traffic signal indication apparatus is "forbidden to pass"; when the near infrared light signal is an image of a second shape, determine that current traffic operation information indicated by the traffic signal indication apparatus is "warning"; or when the near infrared light signal is an image of a third shape, determine that current traffic operation information indicated by the traffic signal indication apparatus is "permitted to pass".

In a possible implementation of the third aspect, the at least two characteristic descriptions respectively describe different near infrared light signal pulse forms.

In a possible implementation of the third aspect, on a basis that the target characteristic includes the pulse form, the determining unit is specifically configured to: when the near infrared light signal is a pulse signal in a first pulse form, determine that current traffic operation information indicated by the traffic signal indication apparatus is "forbidden to pass"; when the near infrared light signal is a pulse signal in a second pulse form, determine that current traffic operation information indicated by the traffic signal indication apparatus is "warning"; or when the near infrared light signal is a pulse signal in a third pulse form, determine that current traffic operation information indicated by the traffic signal indication apparatus is "permitted to pass".

A fourth aspect of embodiments of this application provides a traffic signal indication apparatus. The traffic signal indication apparatus includes a near infrared light source module and a control module. The control module is configured to send a control instruction to the near infrared light source. The near infrared light source module is configured to emit a near infrared light signal according to the control instruction, where the near infrared light signal indicates traffic operation information.

In a possible implementation of the fourth aspect, the control module is specifically configured to cyclically send a plurality of control instructions to the near infrared light source based on a preset period. The near infrared light source module is specifically configured to emit a plurality of near infrared light signals according to the plurality of control instructions, where the plurality of near infrared light signals indicate a plurality of types of traffic operation information.

In a possible implementation of the fourth aspect, the near infrared light source module is specifically configured to: emit a first near infrared light signal according to a first control instruction, where the first near infrared light signal indicates "forbidden to pass"; emit a second near infrared light signal according to a second control instruction, where the second near infrared light signal indicates "warning"; and emit a third near infrared light signal according to a third control instruction, where the third near infrared light signal indicates "permitted to pass".

In a possible implementation of the fourth aspect, any two of the first near infrared light signal, the second near infrared light signal, and the third near infrared light signal differ in at least one of the following: shapes, wavelengths, or pulse forms.

A fifth aspect of embodiments of this application provides a traffic signal indication apparatus. The apparatus includes a controller and at least one near infrared light source. The controller is configured to send a control instruction to the at least one near infrared light source. The at least one near infrared light source is used to emit a near infrared light signal according to the control instruction, where the near infrared light signal indicates traffic operation information.

The traffic signal indication apparatus provided in this embodiment of this application is provided with the near infrared light source, and emits near infrared light to indicate traffic operation information. Compared with visible light, the near infrared light has a strong penetration capability. This can reduce a determining error caused by interference of a factor such as an environment when a terminal recognizes a traffic light by using an image in an intelligent driving system, and can improve traffic signal recognition accuracy.

In a possible implementation of the fifth aspect, the at least one near infrared light source includes one near infrared light source. The near infrared light source is used to periodically emit a plurality of different near infrared light signals, where each of the plurality of different near infrared light signals indicates one type of traffic operation information.

The traffic signal indication apparatus provided in this embodiment of this application includes the one near infrared light source. Different traffic operation information may be periodically indicated by periodically emitting different near infrared light signals. Compared with the conventional technology in which each type of traffic operation information needs to be emitted by using different visible light sources, a quantity of light sources can be reduced, and costs can be reduced.

In a possible implementation of the fifth aspect, any two of the plurality of different near infrared light signals differ in at least one of the following: shapes, wavelengths, or pulse forms.

According to the traffic signal indication apparatus provided in this embodiment of this application, near infrared light information emitted by different near infrared light sources needs to be distinguished, so that the terminal can distinguish different traffic operation information. Specifically, there are a plurality of manners for distinguishing the different near infrared light signals, including a shape, a wavelength, a pulse form, and the like. Therefore, a plurality of possible implementations for distinguishing the near infrared light signals are provided. If a large quantity of traffic operation signals need to be indicated, this solution may also be used.

In a possible implementation of the fifth aspect, the controller is specifically configured to cyclically send a first control instruction, a second control instruction, and a third control instruction to the near infrared light source based on a preset period. The near infrared light source is specifically used to emit a first near infrared light signal according to the first control instruction, emit a second near infrared light signal according to the second control instruction, and emit a third near infrared light signal according to the third control instruction. The first near infrared light signal, the second near infrared light signal, and the third near infrared light signal respectively indicate information about "forbidden to pass", information about "permitted to pass", and information about "warning".

According to the traffic signal indication apparatus provided in this embodiment of this application, the disposed one near infrared light source may indicate traffic operation information indicated by common traffic lights by periodically emitting three different near infrared light signals. Because the near infrared light signal has a strong penetration capability, the near infrared light signal is easy to be recognized by a vehicle-mounted terminal, so that accuracy of obtaining traffic operation information by the terminal can be improved.

In a possible implementation of the fifth aspect, the apparatus includes a first near infrared light source, a second near infrared light source, and a third near infrared light source. The first near infrared light source is used to emit the first near infrared light signal to indicate the information about "forbidden to pass". The second near infrared light source is used to emit the second near infrared light signal to indicate the information about "warning". The third near infrared light source is used to emit the third near infrared light signal to indicate the information about "permitted to pass".

According to the traffic signal indication apparatus provided in this embodiment of this application, a plurality of near infrared light sources may be disposed. Each light source is responsible for emitting one type of near infrared light information to indicate one type of traffic operation information that one-to-one corresponds to a common traffic light. This can improve accuracy of obtaining the traffic operation information by the terminal.

In a possible implementation of the fifth aspect, any two of the first near infrared light signal, the second near infrared light signal, and the third near infrared light signal differ in at least one of the following: shapes, wavelengths, or pulse forms.

In a possible implementation of the fifth aspect, the apparatus further includes a visible light source, where the visible light source includes a red light, a yellow light, and a green light. The first near infrared light source, the second near infrared light source, and the third near infrared light source are successively disposed in correspondence with physical positions of the red light, the yellow light, and the green light.

According to the traffic signal indication apparatus provided in this embodiment of this application, in addition to the near infrared light source, the visible light source, for example, the common traffic light, may be further disposed. Therefore, the terminal may obtain a traffic operation signal by using the two types of light sources, and determining current traffic operation information by combining the two types of light sources can improve determining accuracy

A sixth aspect of embodiments of this application provides a terminal. The terminal includes a near infrared signal detection apparatus and a processor. The near infrared signal detection apparatus is configured to: obtain a near infrared light signal emitted by a traffic signal indication apparatus; and obtain a target characteristic of the near infrared light signal, where the target characteristic includes at least one of a wavelength, an imaging shape, and a pulse form. The processor is configured to: perform matching with at least two preset characteristic descriptions based on the target characteristic, where the at least two characteristic descriptions respectively indicate different traffic operation information; and determine, based on a matching result, target traffic operation information corresponding to the target characteristic.

In a possible implementation of the sixth aspect, the at least two characteristic descriptions respectively indicate at least two types of traffic operation information of "forbidden to pass", "warning", and "permitted to pass".

In a possible implementation of the sixth aspect, the at least two characteristic descriptions respectively describe near infrared light signal wavelength ranges that do not have intersection between each other.

In a possible implementation of the sixth aspect, on a basis that the target characteristic includes the wavelength, the near infrared signal detection apparatus is specifically configured to obtain a first near infrared light signal whose wavelength falls within a first wavelength range, and the processor is specifically configured to determine, based on the first near infrared light signal, that current traffic operation information indicated by the traffic signal indication apparatus is "forbidden to pass"; the near infrared signal detection apparatus is specifically configured to obtain a second near infrared light signal whose wavelength falls within a second wavelength range, and the processor is specifically configured to determine, based on the second near infrared light signal, that current traffic operation information indicated by the traffic signal indication apparatus is "warning"; or the near infrared signal detection apparatus is specifically configured to obtain a third near infrared light signal whose wavelength falls within a third wavelength range, and the processor is specifically configured to determine, based on the third near infrared light signal, that current traffic operation information indicated by the traffic signal indication apparatus is "permitted to pass".

In a possible implementation of the sixth aspect, the at least two characteristic descriptions respectively describe different near infrared light signal imaging shapes.

In a possible implementation of the sixth aspect, on a basis that the target characteristic includes the imaging shape, the near infrared signal detection apparatus is specifically configured to obtain a first near infrared light signal imaged into a first shape, and the processor is specifically configured to determine, based on the first near infrared light signal, that current traffic operation information indicated by the traffic signal indication apparatus is "forbidden to pass"; the near infrared signal detection apparatus is specifically configured to obtain a second near infrared light signal imaged into a second shape, and the processor is specifically configured to determine, based on the second near infrared light signal, that current traffic operation information indicated by the traffic signal indication apparatus is "warning"; or the near infrared signal detection apparatus is specifically configured to obtain a third near infrared light signal imaged into a third shape, and the processor is specifically configured to determine, based on the third near infrared light signal, that current traffic operation information indicated by the traffic signal indication apparatus is "permitted to pass".

In a possible implementation of the sixth aspect, the at least two characteristic descriptions respectively describe different near infrared light signal pulse forms.

In a possible implementation of the sixth aspect, on a basis that the target characteristic includes the pulse form, the near infrared signal detection apparatus is specifically configured to obtain a first near infrared light signal in a first pulse form, and the processor is specifically configured to determine, based on the first near infrared light signal, that current traffic operation information indicated by the traffic signal indication apparatus is "forbidden to pass"; the near infrared signal detection apparatus is specifically configured to obtain a second near infrared light signal in a second pulse form, and the processor is specifically configured to determine, based on the second near infrared light signal, that current traffic operation information indicated by the traffic signal indication apparatus is "warning"; or the near infrared signal detection apparatus is specifically configured to obtain a third near infrared light signal in a third pulse form, and the processor is specifically configured to determine, based on the third near infrared light signal, that current traffic operation information indicated by the traffic signal indication apparatus is "permitted to pass".

A seventh aspect of embodiments of this application provides a terminal, including a processor and a memory. The memory stores computer-readable instructions, and the processor reads the computer-readable instructions, so that the terminal implements the method according to any one of the first aspect and the possible implementations. Optionally, the terminal further includes a near infrared light imaging system, configured to obtain a near infrared signal.

An eighth aspect of embodiments of this application provides a computer program product including instructions. When the computer program product runs on a computer, the computer is enabled to perform the method according to any one of the first aspect and the possible implementations.

A ninth aspect of embodiments of this application provides a computer-readable storage medium, including instructions. When the instructions are run on a computer, the computer is enabled to perform the method according to any one of the first aspect and the possible implementations.

A tenth aspect of embodiments of this application provides a chip, including a processor. The processor is configured to read and execute a computer program stored in a memory, to perform the method according to any possible implementation of any one of the foregoing aspects. Optionally, the chip includes the memory, and the memory is connected to the processor through a circuit or a wire. Further, optionally, the chip further includes a communication interface, and the processor is connected to the communication interface. The communication interface is configured to receive data and/or information that needs to be processed. The processor obtains the data and/or information from the communication interface, processes the data and/or information, and outputs a processing result through the communication interface. The communication interface may be an input/output interface.

For technical effects brought by any implementation of the third aspect, the fourth aspect, the sixth aspect, the seventh aspect, the eighth aspect, the ninth aspect, or the tenth aspect, refer to technical effects brought by a corresponding implementation of the first aspect or the second aspect. Details are not described herein again.

An eleventh aspect of embodiments of this application provides a traffic signal indication system, including the traffic signal indication apparatus according to any one of the third aspect and the possible implementations, and the terminal according to any one of the fourth aspect and the possible implementations.

### BRIEF DESCRIPTION OF DRAWINGS

FIG. 1 is a schematic diagram of an application scenario of a traffic signal recognition method;
FIG. 2 is a schematic diagram of an embodiment of a traffic signal recognition method according to an embodiment of this application;
FIG. 3a is a schematic diagram of different near infrared light signals according to an embodiment of this application;
FIG. 3b is another schematic diagram of different near infrared light signals according to an embodiment of this application;
FIG. 3c is another schematic diagram of different near infrared light signals according to an embodiment of this application;
FIG. 3d is another schematic diagram of different near infrared light signals according to an embodiment of this application;
FIG. 4a is a schematic diagram of a traffic signal indication apparatus according to an embodiment of this application;
FIG. 4b is another schematic diagram of a traffic signal indication apparatus according to an embodiment of this application;
FIG. 4c is another schematic diagram of a traffic signal indication apparatus according to an embodiment of this application;
FIG. 4d is another schematic diagram of a traffic signal indication apparatus according to an embodiment of this application;
FIG. 4e is another schematic diagram of a traffic signal indication apparatus according to an embodiment of this application;
FIG. 4f is another schematic diagram of a traffic signal indication apparatus according to an embodiment of this application;
FIG. 5a is a schematic diagram of a vehicle-mounted terminal according to an embodiment of this application;
FIG. 5b is another schematic diagram of a vehicle-mounted terminal according to an embodiment of this application;
FIG. 6 is a schematic diagram of a traffic signal recognition system according to an embodiment of this application;
FIG. 7 is a schematic diagram of a terminal according to an embodiment of this application; and
FIG. 8 is another schematic diagram of a terminal according to an embodiment of this application.

### DESCRIPTION OF EMBODIMENTS

Embodiments of this application provide a traffic signal recognition method and apparatus, to improve traffic signal recognition accuracy.

For ease of understanding, the following briefly describes some technical terms in embodiments of this application.

### 1. Near infrared

Near infrared (near infrared, NIR) light is an electromagnetic wave between visible light (VIS) and mid-infrared (MIR) light. According to the definition of the American Society for Testing and Materials (ASTM), the near infrared light refers to an electromagnetic wave with a wavelength ranging from 780 nm to 2526 nm. Conventionally, a near infrared area is divided into two areas: a near infrared short wave (780 nm to 1100 nm) area and a near infrared long wave (1100 nm to 2526 nm) area.

In embodiments of this application, the near infrared light is light with a wavelength ranging from 780 nm to 1100 nm, and is also referred to as a near infrared light signal in embodiments of this application.

Because the near infrared light has a longer wavelength than the visible light, the near infrared light can diffract a small particle, has a good capability of penetrating cloud and mist or haze, and can be better propagated in a complex weather condition.

### 2. Near infrared imaging principle

A principle of infrared imaging is similar to that of human eyes. For example, an infrared detector is similar to a pair of eyes, in which a special photosensitive element can sense infrared radiation. The photosensitive element is a rectangular plate with dense light-sensitive points. When infrared rays illuminate these light-sensitive points, these points are activated and trigger electronic transition of the light-sensitive points. As a result, an electric potential difference is generated. The dense electric potential differences are converted into digital signals through AD and then transmitted to a display for display. An infrared image is displayed.

### 3. Traffic signal indication apparatus

The traffic signal indication apparatus generally refers to a traffic signal light. The traffic signal light is a signal light that directs traffic operation, and usually includes a red light, a green light, a yellow light. The red light indicates "forbidden to pass", the green light indicates "permitted to pass", and the yellow light indicates "warning".

The traffic signal light includes a power-driven vehicle signal light, a non-power-driven vehicle signal light, a crosswalk signal light, a direction indication signal light (arrow signal light), a lane signal light, a flashing warning signal light, a signal light at a road-railway intersection, and the like. A specific type of the traffic signal light is not limited in this application.

It may be understood that, information about a plurality of traffic signals may be obtained by using shapes, wavelengths, pulse forms, and the like of near infrared light signals emitted by at least one near infrared light source. For ease of description, in embodiments of this application, indication information of signal lights with three colors in most common traffic lights is used as an example for description. To be specific, a red light indicates "forbidden to pass", a green light indicates "permitted to pass", and a yellow light indicates "warning". In embodiments of this application, the near infrared light may correspondingly indicate three instructions: "forbidden to pass", "permitted to pass", and "warning".

The following describes embodiments of this application with reference to accompanying drawings. It is clear that the described embodiments are merely some but not all of embodiments of this application. A person of ordinary skill in the art may learn that, with technology development and emergence of a new scenario, the technical solutions provided in embodiments of this application are also applicable to a similar technical problem.

In the specification, claims, and accompanying drawings of this application, the terms "first", "second", and so on are intended to distinguish between similar objects but do not necessarily indicate a specific order or sequence. It should be understood that the data termed in such a way is interchangeable in proper circumstances so that embodiments described herein can be implemented in other orders than the order illustrated or described herein. Moreover, the terms "include", "contain" and any other variants mean to cover the non-exclusive inclusion. For example, a process, method, system, product, or device that includes a list of steps or modules is not necessarily limited to those expressly listed steps or modules, but may include other steps or modules not expressly listed or inherent to such a process, method, product, or device. Names or numbers of steps in this application do not mean that the steps in the method procedure need to be performed in a time/logical sequence indicated by the names or numbers. An execution sequence of the steps in the procedure that have been named or numbered can be changed based on a technical objective to be achieved, provided that same or similar technical effect can be achieved.

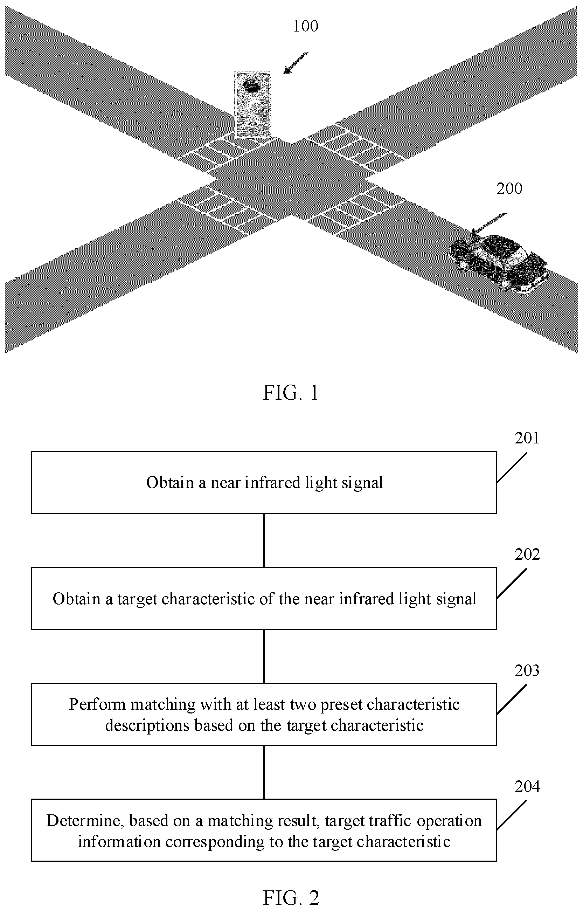

The following describes an application scenario of a traffic signal recognition method according to an embodiment of this application. FIG. 1 is a schematic diagram of an application scenario of a traffic signal recognition method. A traffic signal indication apparatus 100 is disposed at an intersection, and a pedestrian or a driver of a driving vehicle may pass a crosswalk according to an indication of the traffic signal indication apparatus 100. An existing traffic signal indication apparatus is usually a traffic light. With development of intelligent driving technologies, a machine also needs to recognize a traffic indication signal emitted by the traffic signal indication apparatus 100. For example, a terminal 200 recognizes a color of a currently lit light by photographing an image including the traffic light, to determine a traffic signal.

A traffic light signal source is an LED. When the traffic light is recognized by using an image collected by a camera, a frame frequency of the camera is different from an LED blinking frequency. As a result, the traffic light in the image is incomplete. In addition, due to environmental impact, the traffic light may not be recognized in harsh weather conditions such as fog, rain, and snow.

Traffic light recognition faces many problems. Generally, the traffic light signal source is the LED. When the traffic light is recognized by using the image collected by the camera, due to color distortion, incompleteness, interference from a road object, and restrictions on a detection distance and an environment, the traffic light cannot be recognized in the harsh weather conditions such as fog, rain, and snow.

The following describes the traffic signal recognition method provided in this embodiment of this application.

The traffic signal recognition method in this embodiment of this application is generally a vehicle-mounted terminal. In the application scenario, the traffic signal indication apparatus (or referred to as a traffic signal light) includes a near infrared light source, and is configured to indicate a traffic signal. The following first describes a process in which the traffic signal light indicates traffic operation information by emitting a near infrared light signal.

The near infrared light source may emit a plurality of near infrared light signals with different target characteristics, to indicate different traffic operation information. The target characteristic of the near infrared light signal includes at least one of a wavelength, an imaging shape, and a pulse form of the near infrared light signal. A quantity of near infrared light sources and a form of the near infrared light source in the traffic signal light are not limited in this embodiment of this application.

In this embodiment of this application, a signal indication rule includes a target characteristic of a near infrared light signal corresponding to each piece of traffic operation information. A controller may send, to the near infrared light source according to a preset signal indication rule of the traffic signal light, a control instruction corresponding to to-be-indicated traffic operation information (referred to as target traffic operation information), to control the near infrared light source to emit a near infrared light signal with a corresponding target characteristic. The corresponding target characteristic is a target characteristic of the near infrared light signal corresponding to the target traffic operation information indicated by the signal indication rule.

Optionally, the controller may cyclically send a plurality of control instructions to the near infrared light source based on a preset period. The near infrared light source emits a plurality of near infrared light signals according to the plurality of control instructions, where the plurality of near infrared light signals indicate a plurality of types of traffic operation information. It should be noted that a time interval at which the controller cyclically sends the control instructions may be set based on an actual traffic volume of the intersection. A specific time interval is not limited herein. Generally, a cyclic switching sequence of indicated traffic operation information is: "permitted to pass"-"warning"-"forbidden to pass"-"permitted to pass" , and a corresponding switching sequence of visible traffic signal lights is: green-yellow-red-green....

The following describes an example of a process of emitting near infrared light by the traffic signal apparatus, and details are not described herein.

FIG. 2 is a schematic diagram of an embodiment of a traffic signal recognition method according to an embodiment of this application.

201: Obtain a near infrared light signal.

202: Obtain a target characteristic of the near infrared light signal.

The following describes step 201 and step 202.

A terminal may obtain the near infrared light signal emitted by the traffic signal light, and detect the target characteristic of the near infrared light signal.

Optionally, the terminal may be provided with or connected to a near infrared signal detection apparatus, and obtain the near infrared light signal by using the near infrared signal detection apparatus, to detect the target characteristic of the near infrared light signal.

Alternatively, optionally, the terminal may obtain the near infrared light signal from another device. The another device is provided with a near infrared signal detection apparatus, and obtains the near infrared light signal by using the near infrared signal detection apparatus, to detect the target characteristic of the near infrared light signal.

The target characteristic of the near infrared light may be at least one of a wavelength of the near infrared light, an imaging shape of the near infrared light, and a pulse form of the near infrared light.

Step 202 is used to obtain the target characteristic of the near infrared light signal emitted by the traffic signal light. However, because an error exists in a transmission process and/or a detection process of the near infrared light signal, a result of the target characteristic of the near infrared light signal detected by the terminal is not limited in this embodiment of this application to be completely the same as a result of the target characteristic of the near infrared light signal sent by the traffic signal light.

Optionally, the near infrared light signal emitted by the traffic signal light may be understood as including a plurality of beams of near infrared light signals. Wavelengths or pulse forms of any two beams of light in the near infrared light signal emitted by the traffic signal light are not greatly different. Therefore, the terminal may obtain one beam of near infrared light signal emitted by the traffic signal light to detect a wavelength or a pulse form of the near infrared light signal. For example, if the target characteristic includes the wavelength of the near infrared light signal, optionally, the detection apparatus may detect near infrared light signals of different bands by using one camera and optical filters of a plurality of bands and switching the optical filters. Details are not described herein. If the target characteristic includes the imaging shape of the near infrared light signal, to more accurately determine the imaging shape of the near infrared light signal, the detection apparatus may obtain, as completely as possible, all near infrared light signals emitted by the traffic signal light.

203: Perform matching with at least two preset characteristic descriptions based on the target characteristic.

To accurately obtain traffic operation information indicated by the traffic signal light (or referred to as a traffic signal apparatus) to be transmitted by the near infrared light, the terminal needs to obtain preset rule information.

Optionally, the rule information includes the at least two characteristic descriptions used to match the target characteristic, and the at least two characteristic descriptions may respectively indicate different traffic operation information. It is assumed that the traffic operation information indicated by the traffic signal apparatus includes "forbidden to pass", "permitted to pass", and "warning". In this case, the at least two characteristic descriptions include at least three characteristic descriptions, and the three characteristic descriptions respectively indicate three different types of traffic operation information. Optionally, the three characteristic descriptions include a characteristic description 1, a characteristic description 2, and a characteristic description 3. The characteristic description 1 indicates "forbidden to pass", the characteristic description 2 indicates "warning", and the characteristic description 3 indicates "permitted to pass".

Optionally, the at least two characteristic descriptions may correspond to a type of the target characteristic, and correspond to a signal indication rule of the traffic signal light, so that target traffic operation information determined by the terminal is consistent with the traffic operation information indicated by the traffic signal light.

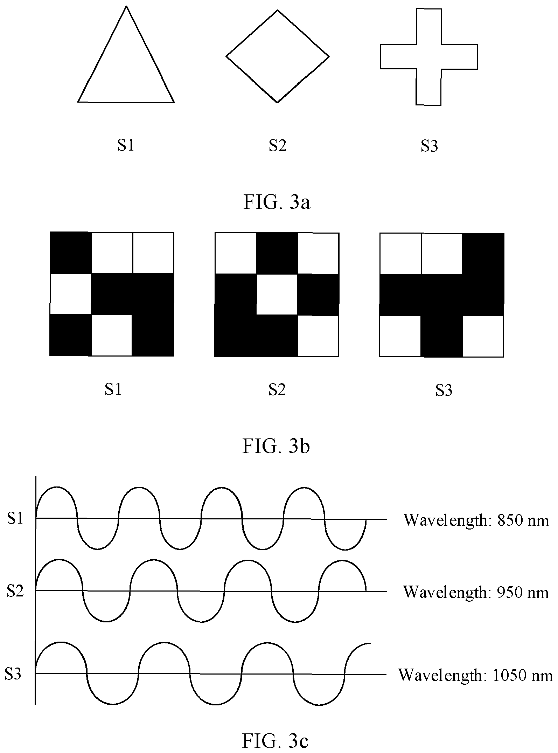

In an example in which the target characteristic of the near infrared light includes the imaging shape of the near infrared light, S1, S2, and S3 respectively indicate target characteristics of near infrared light signals corresponding to the three types of traffic operation information ("forbidden to pass", "warning", and "permitted to pass"). Refer to FIG. 3a. It is assumed that the signal indication rule indicates that an imaging shape of a near infrared light signal corresponding to "forbidden to pass" is a shape (triangle) corresponding to S1 in FIG. 3a, further indicates that an imaging shape of a near infrared light signal corresponding to "warning" is a shape (rhombus) corresponding to S2 in FIG. 3a, and further indicates that an imaging shape of a near infrared light signal corresponding to "permitted to pass" is a shape (cross) corresponding to S3 in FIG. 3a. In this case, the characteristic description 1, the characteristic description 2, and the characteristic description 3 respectively describe the triangle, the rhombus, and the cross.

In an example in which the target characteristic of the near infrared light includes a pattern of the near infrared light, S1, S2, and S3 respectively indicate target characteristics of near infrared light signals corresponding to the three types of traffic operation information ("forbidden to pass", "warning", and "permitted to pass"). Refer to FIG. 3b. It is assumed that the signal indication rule indicates that a pattern of a near infrared light signal corresponding to "forbidden to pass" is a pattern corresponding to S1 in FIG. 3b, further indicates that a pattern of a near infrared light signal corresponding to "warning" is a pattern corresponding to S2 in FIG. 3b, and further indicates that a pattern of a near infrared light signal corresponding to "permitted to pass" is a pattern corresponding to S3 in FIG. 3b. In this case, the characteristic description 1, the characteristic description 2, and the characteristic description 3 respectively describe the patterns corresponding to S1, S2, and S3 in FIG. 3b.

In an example in which the target characteristic of the near infrared light includes the wavelength of the near infrared light, S1, S2, and S3 respectively indicate target characteristics of near infrared light signals corresponding to the three types of traffic operation information ("forbidden to pass", "warning", and "permitted to pass"). Refer to FIG. 3c. It is assumed that the signal indication rule indicates that a pattern of a near infrared light signal corresponding to "forbidden to pass" is a wavelength (850 nm) corresponding to S1 in FIG. 3c, further indicates that a wavelength of a near infrared light signal corresponding to "warning" is a wavelength (950 nm) corresponding to S2 in FIG. 3c, and further indicates that a wavelength of a near infrared light signal corresponding to "permitted to pass" is a wavelength (1050 nm) corresponding to S3 in FIG. 3c. In this case, the characteristic description 1, the characteristic description 2, and the characteristic description 3 respectively describe bands of the wavelengths corresponding to S1, S2, and S3 in FIG. 3c. Optionally, a vehicle-mounted may be an interval [(X-r) nm, (X+r) nm] in which Xnm is located, where X is 850, 950, or 1050, and r < 50.

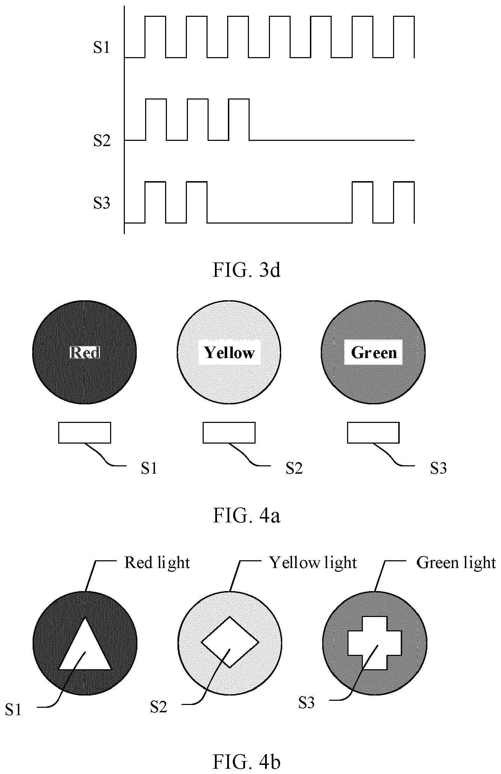

In an example in which the target characteristic of the near infrared light includes the pulse form of the near infrared light, S1, S2, and S3 respectively indicate target characteristics of near infrared light signals corresponding to the three types of traffic operation information ("forbidden to pass", "warning", and "permitted to pass"). Refer to FIG. 3d. It is assumed that the signal indication rule indicates that a pulse form of a near infrared light signal corresponding to "forbidden to pass" is a pulse form corresponding to S1 in FIG. 3d, further indicates that a pulse form of a near infrared light signal corresponding to "warning" is a pulse form corresponding to S2 in FIG. 3d, and further indicates that a pulse form of a near infrared light signal corresponding to "permitted to pass" is a pulse form corresponding to S3 in FIG. 3d. In this case, the characteristic description 1, the characteristic description 2, and the characteristic description 3 respectively describe the pulse forms corresponding to S1, S2, and S3 in FIG. 3d. Refer to FIG. 3d. The pulse form corresponding to S1 is that seven pulse signals are included within preset duration, the pulse form corresponding to S1 is that three pulse signals are included within the preset duration, and the pulse form corresponding to S1 is that four pulse signals are included within the preset duration. A value of the preset duration is not limited in this embodiment of this application. For example, the preset duration may be 1 second.

The traffic signal light may emit near infrared light signals with different target characteristics by using a same light source, or may emit near infrared light signals with different target characteristics by using different light sources

After obtaining the target characteristic of the near infrared light signal, the terminal may perform matching with the at least two preset characteristic descriptions based on the target characteristic, to obtain a matching result. The matching result may indicate a characteristic description (referred to as a target characteristic description) that matches the target characteristic in the at least two characteristic descriptions.

204: Determine, based on the matching result, target traffic operation information corresponding to the target characteristic.

After performing step 203, the terminal may determine, based on the matching result in step 203, the target traffic operation information corresponding to the target characteristic. Optionally, the target traffic operation information may be traffic operation information indicated by the target characteristic description. For example, if the target characteristic description is S1, the target traffic operation information may be "forbidden to pass". For example, if the target characteristic description is S2, the target traffic operation information may be "warning". For example, if the target characteristic description is S3, the target traffic operation information may be "permitted to pass".

In the foregoing example, the rule information indicates the three characteristic descriptions. It may be understood that the rule information may indicate more or fewer characteristic descriptions, and correspondingly, may indicate more or less traffic operation information.

It should be noted that, in this embodiment of this application, in addition to obtaining the near infrared signal, the terminal may further obtain a visible light signal. For example, the terminal photographs a picture of the traffic signal light, performs image recognition to obtain traffic operation information indicated by the visible light signal, and comprehensively determines the traffic operation information corresponding to the near infrared light signal and the information indicated by the visible light signal. This improves accuracy of the traffic operation information indicated by the traffic signal light. With further maturity of supporting technologies, improving accuracy of traffic light detection is helpful to realize unmanned driving. Machine vision is used to detect a traffic light status in a timely manner within a visible distance, thereby avoiding a delay in networking and traffic status detection in case of a network fault.

The following describes the traffic signal indication apparatus (or referred to as the traffic signal light) in embodiments of this application.

The near infrared light source is disposed in the traffic signal indication apparatus in embodiments of this application. It should be noted that the near infrared light source in embodiments of this application is an entirety configured to emit a complete near infrared light indication signal. In other words, one near infrared light source may be used to emit at least one near infrared light signal. Generally, a light emitting diode (LED) includes a plurality of LEDs, similar to an LED lamp. In this embodiment of this application, the near infrared light source that emits the complete near infrared light indication signal may include a plurality of light emitting units. A specific quantity of light emitting units included in the near infrared light source is not limited in embodiments of this application.

It should be noted that, for a transmission distance of the near infrared light emitted by the near infrared light source in the traffic signal indication apparatus, a transmit power may be configured based on a distance requirement in an actual application scenario. The transmit power is positively correlated to the transmission distance of the near infrared light. A specific value of the transmit power is not limited herein. There may be one or more near infrared light sources. A specific quantity is not limited herein.
1. A plurality of near infrared light sources are disposed in the traffic signal indication apparatus, each near infrared light source is used to emit one near infrared light signal, and the near infrared light signals emitted by the plurality of near infrared light sources are different.

Three near infrared light signals that indicate "forbidden to pass", "permitted to pass", and "warning" are used as examples. Three near infrared light sources are disposed in the traffic signal indication apparatus, and the three near infrared light sources are respectively used to emit the near infrared signals to indicate "forbidden to pass", "permitted to pass", and "warning". For example, a near infrared light signal emitted by a first near infrared light source S1 indicates "forbidden to pass", a near infrared light signal emitted by a second near infrared light source S2 indicates "warning", and a near infrared signal emitted by a third near infrared light source S3 indicates "permitted to pass".

The plurality of near infrared light sources are disposed in a plurality of manners.

Optionally, light sources disposed in the traffic signal indication apparatus include the first near infrared light source, the second near infrared light source, and the third near infrared light source.

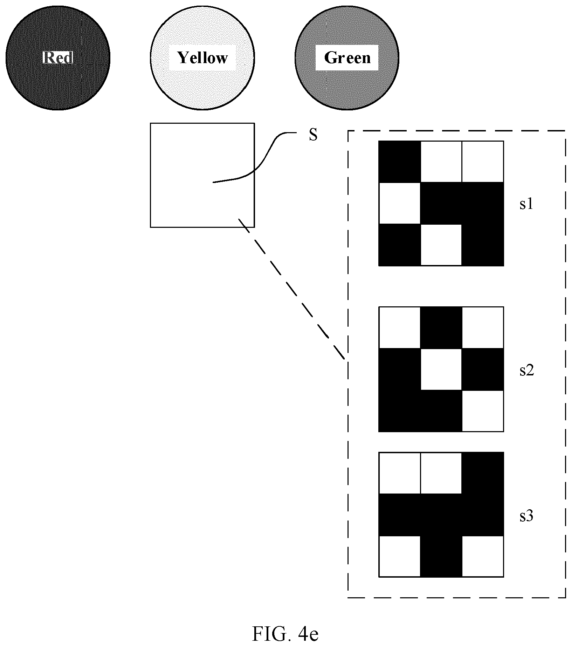

For example, refer to FIG. 4a. The traffic signal indication apparatus includes the first near infrared light source S1, the second near infrared light source S2, and the third near infrared light source S3.

Optionally, as shown in FIG. 4a, common traffic lights (which are collectively referred to as visible light sources in this application) are further disposed in the traffic signal indication apparatus. Optionally, a visible light source and a near infrared light source that have same indication information are correspondingly disposed. For example, the first near infrared light source S1 corresponds to the red light, the second near infrared light source S2 corresponds to the yellow light, and the third near infrared light source S3 corresponds to the green light. The first near infrared light source S1, the second near infrared light source S2, and the third near infrared light source S3 are respectively disposed near the visible light sources.

Optionally, as shown in FIG. 4b, the first near infrared light source S1, the second near infrared light source S2, and the third near infrared light source S3 are respectively used to emit near infrared light of different shapes. The first near infrared light signal is triangular, the second near infrared light signal is rhombus-shaped, and the third near infrared light signal is cross-shaped.

Optionally, the first near infrared light source S1, the second near infrared light source S2, and the third near infrared light source S3 are respectively used to emit near infrared light of different wavelengths. For example, a first near infrared light signal emitted by the first near infrared light source S1 is near infrared light of an 850 nm band, a second near infrared light signal emitted by the second near infrared light source S2 is near infrared light of a 950 nm band, and a third near infrared light signal emitted by the third near infrared light source S3 is near infrared light of a 1050 nm band.

Optionally, the first near infrared light source S1, the second near infrared light source S2, and the third near infrared light source S3 are respectively used to emit near infrared light in different pulse forms. For example, a first near infrared light signal emitted by the first near infrared light source S1 includes seven equal-interval pulse signals, a second near infrared light signal emitted by the second near infrared light source S2 includes four unequal-interval pulse signals, and a third near infrared light signal emitted by the third near infrared light source S3 includes three unequal-interval pulse signals.

Optionally, the first near infrared light source S1, the second near infrared light source S2, and the third near infrared light source S3 are respectively used to emit near infrared light in different patterns (pattern). For example, refer to FIG. 3d. The terminal may determine, through image recognition, indication information corresponding to signals in different patterns.

2. One near infrared light source is disposed in the traffic signal indication apparatus, and the near infrared light source is used to emit a plurality of near infrared light signals.

The near infrared light source is disposed in a plurality of manners.

Optionally, only one near infrared light source S is disposed in the traffic signal indication apparatus, and the near infrared light source S may periodically switch, based on a preset time interval, emitted near infrared light signals, for example, periodically switch three near infrared light signals that respectively indicate "forbidden to pass", "warning", and "permitted to pass".

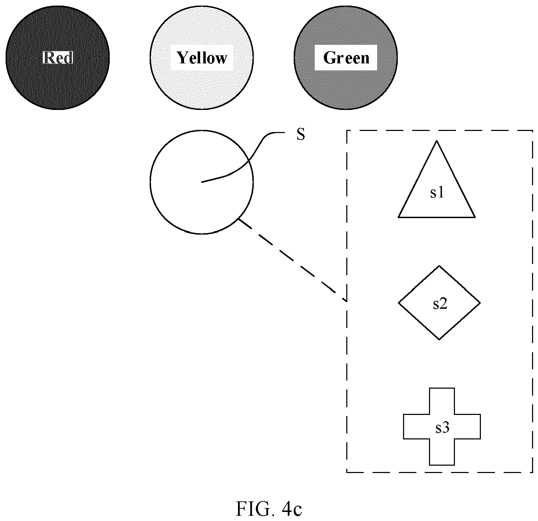

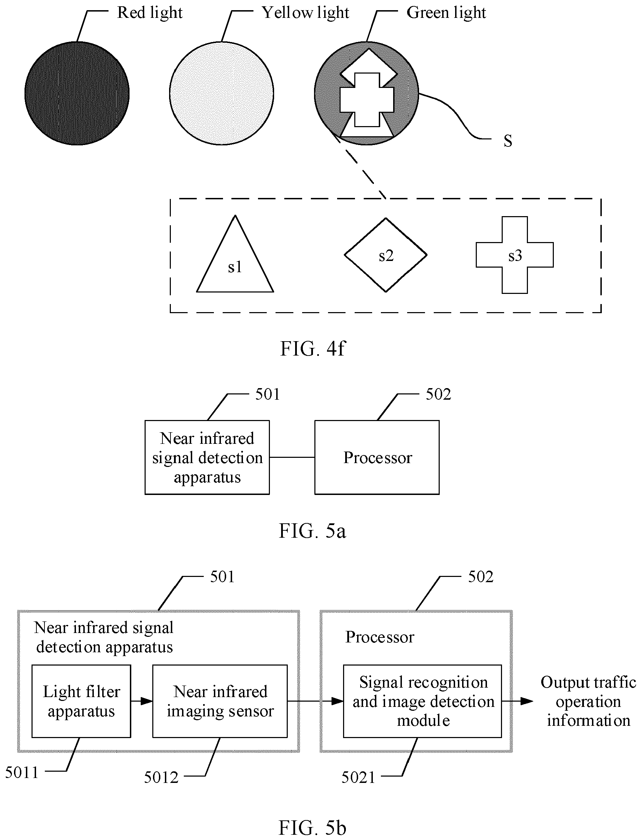

Optionally, a visible light source is further disposed in the traffic signal indication apparatus. Optionally, the near infrared light source S is disposed near the visible light source. Optionally, refer to FIG. 4c to FIG. 4e. Alternatively, the near infrared light source and the visible light source are disposed in an overlapping manner. Optionally, refer to FIG. 4f. The near infrared light source S and a green light are disposed in an overlapping manner.

There are a plurality of manners in which the near infrared light source indicates different near infrared light signals.

Optionally, as shown in FIG. 4c, the near infrared light source S may periodically emit near infrared light of different shapes. For example, the near infrared light source S emits a triangular first near infrared light signal s1 in a first time period of a cycle, emits a rhombus-shaped second near infrared light signal s2 in a second time period of the cycle, and emits a cross-shaped third near infrared light signal s3 in a third time period of the cycle.

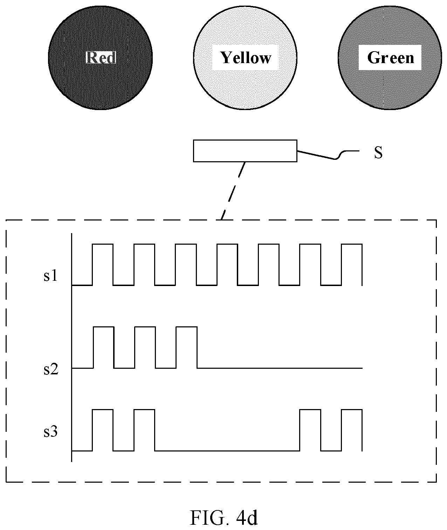

Optionally, as shown in FIG. 4d, the near infrared light source S may periodically emit near infrared light in different pulse forms. For example, in a first time period of a cycle, an emitted first near infrared light signal s1 includes seven equal-interval pulse signals; in a second time period of the cycle, an emitted second near infrared light signal s2 includes four unequal-interval pulse signals; and in a third time period of the cycle, an emitted third near infrared light signal s3 includes three unequal-interval pulse signals.

Optionally, as shown in FIG. 4f, the near infrared light source S may periodically emit near infrared light in different patterns (pattern). For example, a first near infrared light signal s1 in a first pulse form is emitted in a first time period of a cycle, a second near infrared light signal s2 in a second pulse form is emitted in a second time period of the cycle, and a third near infrared light signal s3 in a third pulse form is emitted in a third time period of the cycle.

The following describes the vehicle-mounted terminal in embodiments of this application. Refer to FIG. 5a and FIG. 5b.

As shown in FIG. 5a, the vehicle-mounted terminal includes a near infrared signal detection apparatus 501 and a processor 502.

The near infrared signal detection apparatus 501 is configured to obtain a near infrared light signal, and may include various existing near infrared light signal collection apparatuses. A specific device form of the apparatus is not limited. The near infrared signal detection apparatus 501 is further configured to obtain a target characteristic of the near infrared light signal, where the target characteristic includes at least one of a wavelength, an imaging shape, and a pulse form. The processor 502 is configured to: perform matching with at least two preset characteristic descriptions based on the target characteristic, where the at least two characteristic descriptions respectively indicate different traffic operation information. The processor 502 is further configured to determine, based on a matching result, target traffic operation information corresponding to the target characteristic.

Optionally, the at least two characteristic descriptions respectively indicate at least two types of traffic operation information of "forbidden to pass", "warning", and "permitted to pass".

Optionally, the at least two characteristic descriptions respectively describe near infrared light signal wavelength ranges that do not have intersection between each other.

Optionally, the near infrared signal detection apparatus 501 is specifically configured to obtain a first near infrared light signal whose wavelength falls within a first wavelength range, and the processor 502 is specifically configured to determine, based on the first near infrared light signal, that current target traffic operation information indicated by a traffic signal indication apparatus is "forbidden to pass". Alternatively, the near infrared signal detection apparatus 501 is specifically configured to obtain a second near infrared light signal whose wavelength falls within a second wavelength range, and the processor 502 is specifically configured to determine, based on the second near infrared light signal, that current traffic operation information indicated by a target traffic signal indication apparatus is "warning". Alternatively, the near infrared signal detection apparatus 501 is specifically configured to obtain a third near infrared light signal whose wavelength falls within a third wavelength range, and the processor 502 is specifically configured to determine, based on the third near infrared light signal, that current traffic operation information indicated by a target traffic signal indication apparatus is "permitted to pass".

Optionally, the at least two characteristic descriptions respectively describe different near infrared light signal imaging shapes.

Optionally, the near infrared signal detection apparatus 501 is specifically configured to obtain a first near infrared light signal imaged into a first shape, and the processor 502 is specifically configured to determine, based on the first near infrared light signal, that current traffic operation information indicated by a traffic signal indication apparatus is "forbidden to pass". Alternatively, the near infrared signal detection apparatus 501 is specifically configured to obtain a second near infrared light signal imaged into a second shape, and the processor 502 is specifically configured to determine, based on the second near infrared light signal, that current traffic operation information indicated by a traffic signal indication apparatus is "warning". Alternatively, the near infrared signal detection apparatus 501 is specifically configured to obtain a third near infrared light signal imaged into a third shape, and the processor 502 is specifically configured to determine, based on the third near infrared light signal, that current traffic operation information indicated by a traffic signal indication apparatus is "permitted to pass".

Optionally, the at least two characteristic descriptions respectively describe different near infrared light signal pulse forms.

Optionally, the near infrared signal detection apparatus 501 is specifically configured to obtain a first near infrared light signal in a first pulse form, and the processor 502 is specifically configured to determine, based on the first near infrared light signal, that current traffic operation information indicated by a traffic signal indication apparatus is "forbidden to pass". Alternatively, the near infrared signal detection apparatus 501 is specifically configured to obtain a second near infrared light signal in a second pulse form, and the processor 502 is specifically configured to determine, based on the second near infrared light signal, that current traffic operation information indicated by a traffic signal indication apparatus is "warning". Alternatively, the near infrared signal detection apparatus 501 is specifically configured to obtain a third near infrared light signal in a third pulse form, and the processor 502 is specifically configured to determine, based on the third near infrared light signal, that current traffic operation information indicated by a traffic signal indication apparatus is "permitted to pass".

FIG. 5b shows a possible implementation of a vehicle-mounted terminal according to an embodiment of this application. The near infrared signal detection apparatus 501 includes a light filter apparatus 5011 and a near infrared imaging sensor 5012. The light filter apparatus 5011 may be, for example, a band-pass light filter. If the near infrared light signal is collected by the near infrared imaging sensor 5012 by using the light filter apparatus 5011, it may be determined that a wavelength of the near infrared light signal falls within an optical signal within a wavelength range in which the light filter apparatus 5011 can pass through. It should be noted that the vehicle-mounted terminal may include one or more light filter apparatuses 5011. In a possible implementation, a wavelength range within which the wavelength of the near infrared light signal falls may be detected by switching light filters with different parameters. In another possible implementation, the vehicle-mounted terminal may include a plurality of groups of near infrared detection apparatuses, each group of near infrared detection apparatuses includes a light filter apparatus and a near infrared imaging sensor, and each group of near infrared detection apparatuses is configured to detect near infrared light signals within different wavelength ranges.

In this embodiment of this application, the near infrared signal detection apparatus 501 cooperates with the light filter apparatus 5011 to detect near infrared light in a specific band, so that various clutter light interference in an environment can be better filtered out, and clear imaging is implemented, thereby ensuring recognition accuracy.

In addition, the near infrared imaging sensor 5012 may further obtain imaging information of the near infrared light signal, similar to visible light imaging information. With reference to a signal recognition and image detection module 5021 in the processor 502, the terminal may obtain a shape of the near infrared light signal, for example, a rhombus, a circle, or a cross.

Optionally, if the imaging information of the near infrared light signal obtained by the near infrared imaging sensor 5012 is pattern information similar to two-dimensional code, the signal recognition and image detection module 5021 obtains, by using a prestored corresponding rule, the traffic operation information indicated by the near infrared light signal. Optionally, although not shown in FIG. 5b, the processor 502 may further include a check module and an error correction module, configured to check and correct the imaging information, to improve signal recognition accuracy and avoid false judgement.

Optionally, the near infrared imaging sensor 5012 may further obtain pulse form information of the near infrared light signal through detection within a duration range.

In addition, the vehicle-mounted terminal may output the traffic operation information based on the traffic operation information obtained by the processor 502. Optionally, the vehicle-mounted terminal may output the traffic operation information by using a voice, an image, or the like. Optionally, the vehicle-mounted terminal may output current signal light status information, for example, "red light", "yellow light", or "green light", based on a common signal light pattern, to prompt a user of traffic operation information of a current intersection.

It may be understood that the vehicle-mounted terminal may detect a wavelength, an imaging shape, a pulse form, and the like of the near infrared light signal by using the near infrared signal detection apparatus 501 and the processor 502, and may obtain the traffic operation information of the current intersection based on a preset correspondence between the near infrared light signal and the traffic operation information. Compared with a visible light signal light, traffic signal recognition accuracy can be improved.

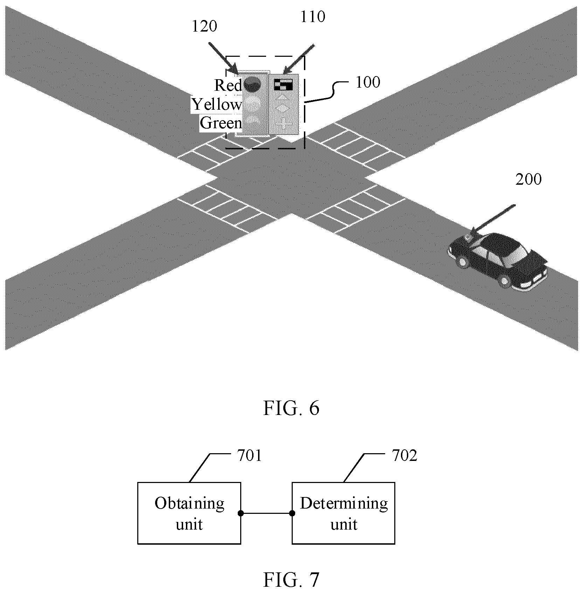

The following describes a traffic signal recognition system provided in an embodiment of this application. FIG. 6 is a schematic diagram of a traffic signal recognition system according to an embodiment of this application.

A traffic signal indication apparatus 100 is disposed at an intersection. A near infrared light source 110 is disposed in the traffic signal indication apparatus 100, and may emit near infrared light to indicate a traffic signal. A vehicle-mounted terminal 200 analyzes and recognizes a current traffic signal by using a near infrared light signal obtained by a near infrared signal detection apparatus. Optionally, the traffic signal indication apparatus 100 is further provided with a visible light source 120, including a red light, a yellow light, and a green light.

The terminal 200 may be a vehicle-mounted terminal. The near infrared signal detection apparatus is disposed in the terminal 200, and the current traffic signal at the intersection may be obtained based on the obtained near infrared light source.

Invisible signals emitted by the near infrared light source 110 in the traffic signal indication apparatus 100 indicate different traffic operation information in different shapes, and may respectively correspond to traffic operation information indicated by the red light, the yellow light, and the green light in the visible light source. The near infrared light emitted by the near infrared light source 110 is emitted to a specific distance range. A corresponding detection module is installed on the vehicle-mounted terminal to detect the corresponding near infrared light signal through near infrared imaging and image recognition, so as to obtain a status of the traffic light at the intersection.

It may be understood that, to avoid near infrared light signal interference at a plurality of intersections, in a road system, a near infrared light emission distance of a near infrared light source in each traffic signal indication apparatus may be set based on a road length between intersections. In addition, the vehicle-mounted terminal may distinguish traffic operation information of different intersections based on sizes of imaging targets on an imaging image and according to a principle that everything looks small in the distance and big on the contrary.

The following describes a terminal that implements the traffic signal recognition method. FIG. 7 is a schematic diagram of an embodiment of a terminal according to an embodiment of this application.

One or more of modules in FIG. 7 may be implemented by software, hardware, firmware, or a combination thereof. The software or firmware includes but is not limited to computer program instructions or code, and may be executed by a hardware processor. The hardware includes but is not limited to various integrated circuits, for example, a central processing unit (CPU), a digital signal processor (DSP), a field programmable gate array (FPGA), or an application-specific integrated circuit (ASIC).

The terminal includes:
an obtaining unit 701, configured to: obtain a near infrared light signal emitted by a traffic signal indication apparatus; and obtain a target characteristic of the near infrared light signal, where the target characteristic includes at least one of a wavelength, an imaging shape, and a pulse form; and
a determining unit 702, configured to: perform matching with at least two preset characteristic descriptions based on the target characteristic, where the at least two characteristic descriptions respectively indicate different traffic operation information; and determine, based on a matching result, target traffic operation information corresponding to the target characteristic.

Optionally, the at least two characteristic descriptions respectively indicate at least two types of traffic operation information of "forbidden to pass", "warning", and "permitted to pass".

Optionally, the at least two characteristic descriptions respectively describe near infrared light signal wavelength ranges that do not have intersection between each other.

Optionally, the determining unit 702 is specifically configured to: when a wavelength of the near infrared light signal falls within a first wavelength range, determine that current traffic operation information indicated by the traffic signal indication apparatus is "forbidden to pass"; when a wavelength of the near infrared light signal falls within a second wavelength range, determine that current traffic operation information indicated by the traffic signal indication apparatus is "warning"; or when a wavelength of the near infrared light signal falls within a third wavelength range, determine that current traffic operation information indicated by the traffic signal indication apparatus is "permitted to pass". There is no intersection between the first wavelength range, the second wavelength range, and the third wavelength range.

Optionally, the at least two characteristic descriptions respectively describe different near infrared light signal imaging shapes.

Optionally, the determining unit 702 is specifically configured to: when the near infrared light signal is an image of a first shape, determine that current traffic operation information indicated by the traffic signal indication apparatus is "forbidden to pass"; when the near infrared light signal is an image of a second shape, determine that current traffic operation information indicated by the traffic signal indication apparatus is "warning"; or when the near infrared light signal is an image of a third shape, determine that current traffic operation information indicated by the traffic signal indication apparatus is "permitted to pass".

Optionally, the at least two characteristic descriptions respectively describe different near infrared light signal pulse forms.

Optionally, the determining unit 702 is specifically configured to: when the near infrared light signal is a pulse signal in a first pulse form, determine that current traffic operation information indicated by the traffic signal indication apparatus is "forbidden to pass"; when the near infrared light signal is a pulse signal in a second pulse form, determine that current traffic operation information indicated by the traffic signal indication apparatus is "warning"; or when the near infrared light signal is a pulse signal in a third pulse form, determine that current traffic operation information indicated by the traffic signal indication apparatus is "permitted to pass".

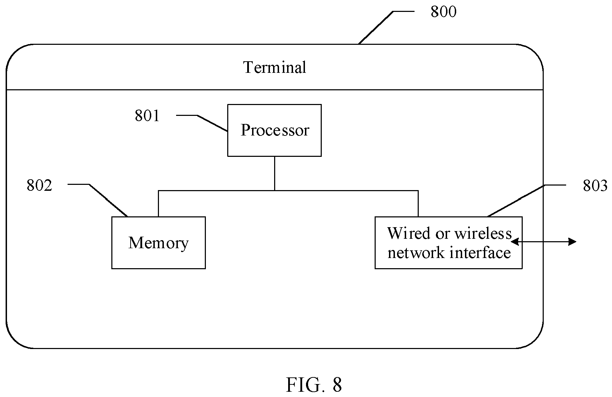

FIG. 8 is a schematic diagram of another embodiment of a terminal according to an embodiment of this application.

The terminal provided in this embodiment may be a vehicle-mounted terminal in various forms. A specific device form of the terminal is not limited in this embodiment of this application.

A terminal 800 may differ greatly due to different configurations or performance, and may include one or more processors 801 and one or more memories 802. The memory 802 stores a program or data.

The memory 802 may be a volatile memory or a non-volatile memory. Optionally, the processor 801 is one or more central processing units (central processing unit, CPU). The CPU may be a single-core CPU, or may be a multi-core CPU. The processor 801 may communicate with the memory 802, and execute, on the terminal 800, a series of instructions in the memory 802.

The terminal 800 further includes one or more wired or wireless network interfaces 803, such as Ethernet interfaces.

Optionally, although not shown in FIG. 8, the terminal 800 may further include one or more power supplies and one or more input/output interfaces. The input/output interface may be configured to connect to a display, a mouse, a keyboard, a touchscreen device, a sensor device, or the like. The input/output interface is an optional component, and may exist or may not exist. This is not limited herein.

For a procedure performed by the processor 801 in the terminal 800 in this embodiment, refer to the method procedure described in the foregoing method embodiments. Details are not described herein again.

It may be clearly understood by a person skilled in the art that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a floppy disk, or a compact disc.

The foregoing embodiments are merely intended for describing the technical solutions of this application other than limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the spirit and scope of the technical solutions of embodiments of this application.

## Claims

1. A traffic signal recognition method, wherein the traffic signal recognition method is applied to a terminal device, and the method comprises:
obtaining a near infrared light signal emitted by a traffic signal indication apparatus;
obtaining a target characteristic of the near infrared light signal, wherein the target characteristic comprises at least one of a wavelength, an imaging shape, and a pulse form;
performing matching with at least two preset characteristic descriptions based on the target characteristic, wherein the at least two characteristic descriptions respectively indicate different traffic operation information; and
determining, based on a matching result, target traffic operation information corresponding to the target characteristic.

2. The method according to claim 1, wherein the at least two characteristic descriptions respectively indicate at least two types of traffic operation information of "forbidden to pass", "warning", and "permitted to pass".

3. The method according to claim 1 or 2, wherein the at least two characteristic descriptions respectively describe near infrared light signal wavelength ranges that do not have intersection between each other.

4. The method according to claim 1 or 2, wherein the at least two characteristic descriptions respectively describe different near infrared light signal imaging shapes.

5. The method according to claim 1 or 2, wherein the at least two characteristic descriptions respectively describe different near infrared light signal pulse forms.

6. A terminal, wherein the terminal comprises:
a near infrared signal detection apparatus and a processor, wherein
the near infrared signal detection apparatus is configured to: obtain a near infrared light signal emitted by a traffic signal indication apparatus; and obtain a target characteristic of the near infrared light signal, wherein the target characteristic comprises at least one of a wavelength, an imaging shape, and a pulse form; and
the processor is configured to: perform matching with at least two preset characteristic descriptions based on the target characteristic, wherein the at least two characteristic descriptions respectively indicate different traffic operation information; and determine, based on a matching result, target traffic operation information corresponding to the target characteristic.

7. The terminal according to claim 6, wherein the at least two characteristic descriptions respectively indicate at least two types of traffic operation information of "forbidden to pass", "warning", and "permitted to pass".

8. The terminal according to claim 6 or 7, wherein the at least two characteristic descriptions respectively describe near infrared light signal wavelength ranges that do not have intersection between each other.

9. The terminal according to claim 6 or 7, wherein the at least two characteristic descriptions respectively describe different near infrared light signal imaging shapes.

10. The terminal according to claim 6 or 7, wherein the at least two characteristic descriptions respectively describe different near infrared light signal pulse forms.

11. A terminal, comprising a processor and a memory, wherein
the memory stores computer-readable instructions; and
the processor reads the computer-readable instructions, so that the terminal implements the method according to any one of claims 1 to 5.

12. A computer program product, comprising computer-readable instructions, wherein when the computer-readable instructions are run on a computer, the computer is enabled to perform the method according to any one of claims 1 to 5.

13. A computer-readable storage medium, comprising computer-readable instructions, wherein when the computer-readable instructions are run on a computer, the computer is enabled to perform the method according to any one of claims 1 to 5.
